# EUROPEAN PATENT SPECIFICATION

(11) **EP 4 040 919 B1**
(45) Date of publication and mention of the grant of the patent: **31.01.2024**
(21) Application number: 22155417.3
(22) Date of filing: 07.02.2022
(51) Int. Cl.: H05B 45/10, H05B 47/115, H05B 47/19

(54) **AUTOMATIC LIGHTING SYSTEM AND CONTROL METHOD**
AUTOMATISCHES BELEUCHTUNGSSYSTEM UND STEUERUNGSVERFAHREN
SYSTÈME D'ÉCLAIRAGE AUTOMATIQUE ET PROCÉDÉ DE COMMANDE

(30) Priority: 09.02.2021 CN 202110177174
(43) Date of publication of application: 10.08.2022
(73) Proprietor: Self Electronics Co., Ltd., Ningbo City, Zhejiang 315103 (CN); SELF ELECTRONICS Germany GmbH, 51149 Köln (DE); Lin, Wanjiong, Ningbo City, Zhejiang 315103 (CN)
(72) Inventor: Zou, Huimin, Ningbo, 315103 (CN); Xu, Binjie, Ningbo, 315103 (CN); Zhang, Jian, Ningbo, 315103 (CN)
(74) Representative: 2K Patentanwälte Blasberg Kewitz & Reichel

(56) References cited:
- CN-A- 111 405 723
- US-A1- 2012 062 123
- US-A1- 2013 033 178
- US-A1- 2015 076 993

## Description

### RELATED APPLICATION

This application claims priority to a Chinese Patent Application No. CN 202110177174.5, filed on February 9, 2021.

### FIELD OF THE TECHNOLOGY

The present invention relates to the field of lighting control technologies, particularly on an automatic lighting system according to claim 1 and an automatic lighting control method according to claim 5. Preferred embodiments of the invention are defined in the dependent claims.

### BACKGROUND

In order to improve the quality of life, save energy and prolong the service life of lighting equipment, **more and** more intelligent sensing equipment has been applied to lighting system, existing technology already exists to control lighting systems by placing sensors that sense the presence and movement of people or objects.

At present, sensor detection of moving people or objects is mostly used independently. However, in a network, when multiple sensors exist simultaneously and control different lights in the same area, it will cause the dissynchronization phenomenon and DISCO phenomenon between multiple lights. The publication CN 111 405 723 A discloses an automatic lighting system comprising a plurality of sensing lighting devices,

### BRIEF SUMMARY THE TECHNOLOGY

In view of this, the present invention provides an automatic lighting system and a control method to solve the above technical problems.

An automatic lighting system includes at least two sets of sensing lighting devices, which comprises light source module, control module, communication module and sensor module, all communication modules are configured to the same communication network; and the control module controls the brightness of the respective light source module according to signals in the respective sensing module or communication network.
advantageously, the communication module uses Bluetooth.
advantageously, the sensor module is a microwave sensor.
advantageously, the sensing lighting devices are installed in the same illumination area.

An automatic lighting control method adopting an automatic lighting system mentioned above includes the following steps:
001. The sensor module detects whether someone or something is within the detection range, if there is an effective signal, the control module of the same device receives the effective signal and sends the effective signal to the communication network through the communication module, and controls the light source module of the same device according to the effective signal to maintain the first brightness;
002. The control module obtains an effective signal from the communication network (200) through the communication module of the same device, and controls the light source module of the same device to maintain the first brightness;
003. When the control module determines that there is no effective signal at present, the light source module that controls the same device is maintained at a second brightness less than the first brightness.
advantageously, in step 001, the control module controls the light source module of the same device to maintain at the first brightness according to the effective signal delay of 30ms~100ms.
advantageously, a detection period of the sensor module in step 001 is 5s to 20s.
advantageously, in step 003, the control module determines that there is no current effective signal under the following condition: the control module has not received an effective signal after 20s to 50s.

The technical effects of the present invention:

The automatic lighting system of the present invention is provided with a plurality of sensor lighting devices, which can be increased and decreased according to the need, and its use and arrangement is very flexible. There is no need for the overall design and layout of the lighting system, and the synchronization between each set of lighting devices is high, it will not appear suddenly bright or dark situation, as a whole, it is easy to use and lighting effect is good.

### BRIEF DESCRIPTION OF THE DRAWINGS

Embodiments of the present invention will be described below with reference to the drawings, in which:
FIG.1 is a structural wireframe diagram of the automatic lighting system of the present embodiment.
FIG.2 is an example of a flow diagram of the automatic lighting control method of the present embodiment.

### DETAILED DESCRIPTION OF THE INVENTION

Specific embodiments of the present invention will be described in further detail below based on the drawings. It should be understood that the description of the embodiments of the present invention herein is not intended to limit the protection scope of the present invention.

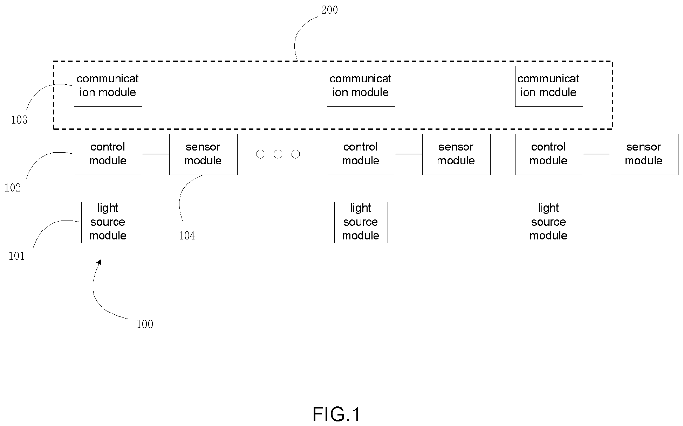

As shown in Figure 1, the automatic lighting system of the present invention includes at least two sets of sensing lighting devices 100. In this embodiment, for the convenience of description, four sets of sensing lighting devices 100 are taken as examples. Each set of sensing lighting devices 100 in this embodiment has the same structure and composition, which includes light source module 101, control module 102, communication module 103 and sensor module 104. The light source module 101 refers to luminescent equipment, which generally refers to the lamp body, which can be kinds of electric energy luminescent equipment. In order to save energy and reduce emission, the light source module 101 in this example refers to LED lamps, which are generally equipped with a drive module, which is the prior art and will not be described here. The communication module 103 is used to receive and transmit signals, and can also use existing technologies, in this embodiment, the communication module 103 adopts Bluetooth, which has mature technology and many functions, and meets the requirements of this embodiment, the networking can use Bluetooth Mesh function.

The control module 103 is used for receiving, sending and processing signals. Currently, SCM is commonly used, and SCM is also used in this embodiment. Control module 103 can integrate the control functions of communication module 103, sensor module 104 and light source module 101 with one single chip microcomputer, or communication module 103, sensor module 104 and light source module 101 can be separately set with their own single chip microcomputer. In the prior art, communication module 103, sensor module 104 and light source module 101 are always integrated with SCM when sold. In order to facilitate manufacturing, ready-made communication module 103, sensor module 104 and light source module 101 with microcontrollers are generally purchased. In this embodiment, the Bluetooth adopted by communication module 103 has a control unit, and the specific settings can be selected according to needs. The implementation modes of control module 103 mentioned above are existing technologies without further description.

In order to realize synchronous lighting control, in this embodiment, all communication modules 101 are configured to the same communication network 200;The control module 102 controls the brightness of the respective light source module 101 according to the signals in the respective sensing module 104 or communication network 200. Through networking, the signals detected by the sensor module 104 of each sensor lighting device 100 are sent to the communication network 200 for sharing, so that sensor lighting devices 100 can realize synchronous lighting.

In addition, the automatic lighting system can be grouped in a large system. Multiple sets of devices can first form a large communication network. After forming a large communication network, they can be grouped into multiple communication networks according to the different application environment of the sensor module and each communication network corresponds to an automatic lighting system. The sensor modules between the various automatic lighting systems do not interfere with each other. Large communication network can be used to configure other parameters to simplify parameter configuration.

The sensor module 104 is used to detect people or objects entering the lighting area, as long as the above functions can be realized. In this embodiment, the sensor module 104 is a microwave sensor with high sensitivity and accuracy. PIR pyroelectric sensor, infrared sensor or ultrasonic sensor can also be used.

The lighting system of this embodiment is mainly for the lighting of the same area. The sensor lighting device 100 is installed in the same lighting area, and the embodiment realizes synchronous lighting with good lighting effect.

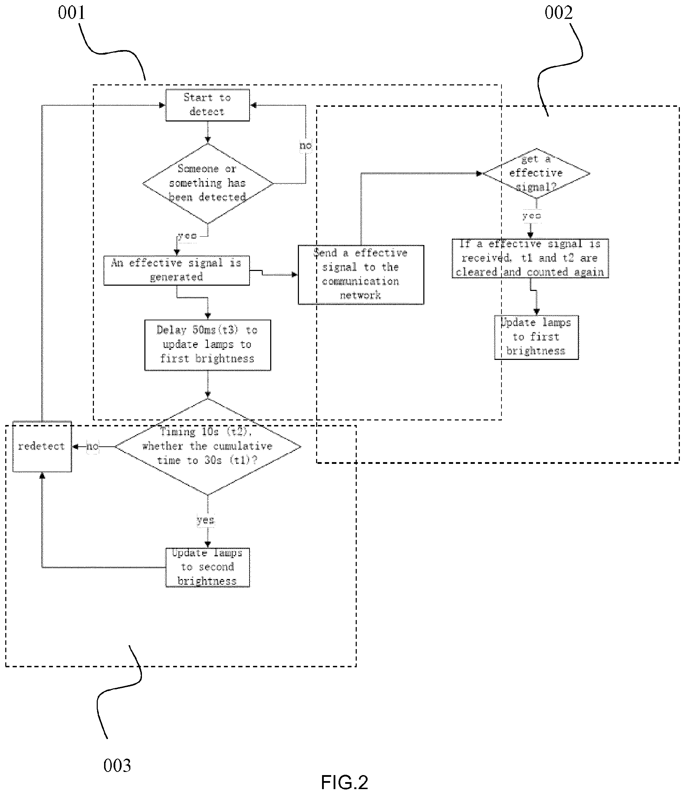

As shown in Figure 2, the automatic lighting control method of this embodiment adopts the automatic lighting system according to the above mentioned, including the following steps:
001. The sensor module 104 detects whether someone or something is within the detection range, if there is an effective signal, the control module 102 of the same device receives the effective signal and sends the effective signal to the communication network 200 through the communication module 103, and controls the light source module 101 of the same device according to the effective signal to maintain the first brightness;
002. The control module 102 obtains an effective signal from the communication network 200 through the communication module 103 of the same device, and controls the light source module 101 of the same device to maintain the first brightness;
003. When the control module 102 determines that there is no effective signal at present, the light source module 101 that controls the same device is maintained at a second brightness less than the first brightness.

In order to describe more accurately, In this embodiment, each set of sensor lighting device 100 is numbered as A, B, C and D respectively, and the sensor lighting devices 100 (A, B, C and D) in the same network are in unmanned state after power-on and initialization. At this time, the light source module 101 is in the second brightness, which can be 0 or a low brightness, such as 10% of the maximum brightness; Then someone or something is detected by A, that is, an effective signal is generated, and then A broadcasts a instruction telling BCD that it has detected someone or something, and A will turn on its load lamp to the first brightness, which can be the maximum brightness or the proportion can be set as required, as long as it is higher than the second brightness. BCD will adjust their lamps to the first brightness after receiving the instruction from A; A, B, C, and D are timed separately, and when 5s to 20s (t2) are recorded, all sensor modules 104 start to detect again, if B detects someone or something at this time, B sends a instruction to ACD. ABCD all clear their respective timing value; When the timing reaches more than 20s to 50s (t1)and no person or object is detected by all devices, it is considered that no one is present, and the sensor lighting device 100 reduces the brightness to the second brightness respectively.

The method of this embodiment is simple to install and there is no need to calibrate each sensor module 104. And It runs automatically after being powered on, not only to achieve the effect of automatic energy saving and avoid the asynchronous phenomenon between each other. The automatic lighting system is suitable for multiple sets of devices in the same public area: In the application system, since each sensor lighting device 100 has a light controller that controls the light source module 101, the light controller is a part of the control module 102. If an independent sensing is used, the state of multiple light source modules 101 in the same area will be inconsistent (Some sense that the light is on, some don't sense that the light is off), and the mechanism adopted above avoids this phenomenon. When the device detects people, it will inform every sensor device in the network, so that all devices will unify the state and achieve the state unification.

In order to improve the synchronization of sensor lighting devices 100, in step 001, the control module 102 controls the light source module 101 of the same device to maintain at the first brightness according to the effective signal delay of 30ms~100ms. That is, when the control module 102 receives the effective signal detected by the sensor module 104 of the same device, the brightness of the same device will be adjusted 30ms∼100ms (t3) later, so as to adjust the brightness synchronously with other devices receiving effective signals from the network.

To balance efficiency and power consumption, the detection period of the sensor module 104 in step 001 is 5s to 20s. Further, in step 003, the control module 102 determines that there is no current effective signal under the following conditions: the control module 102 has not received a effective signal after 20s to 50s.

The above are only preferred embodiments of the present invention, and are not used to limit the protection scope of the present invention. Any modification, equivalent replacement or improvement within the present invention is covered by the scope of the claims of the present invention.

## Claims

1. An automatic lighting system, comprising a plurality of sensing lighting devices (100), wherein each sensing lighting device (100) comprises a light source module (101), a control module (102), a communication module (103) and a sensor module (104), wherein all communication modules (101) are configured to a same communication network (200);
wherein each sensor module (104) is configured to detect whether someone or something is within its respective detection range and to generate an effective signal if someone or something is detected;
**characterized in that** each control module (102) is configured to:
receive the effective signal from the respective sensor module (104) of the same sensing lighting device (100) and, if the effective signal from the respective sensor module (104) of the same sensing lighting device (100) is received, to send the effective signal to the communication network (200) through the communication module (103);
receive an effective signal present in the communication network (200) through the communication module (103);
control the brightness of the respective light source module (101) of the same sensing lighting device (100) to maintain a first brightness if the effective signal is received from the respective sensor module (104) of the same sensing lighting device (100) or the communication network (200); and control the brightness of the respective light source module (101) of the same sensing lighting device (100) to maintain a second brightness less than the first brightness after no effective signal is received from the respective sensor module (104) of the same sensing lighting device (100) or the communication network (200).

2. The automatic lighting system as claimed in claim 1, wherein each communication module (103) is configured to use Bluetooth.

3. The automatic lighting system as claimed in claim 1, wherein each sensor module (104) is a microwave sensor.

4. The automatic lighting system as claimed in claim 1, wherein the plurality of sensing lighting devices (100) are installed in the same illumination area.

5. An automatic lighting control method for an automatic lighting system comprising a plurality of sensing lighting devices (100), wherein each sensing lighting device (100) comprises a light source module (101), a control module (102), a communication module (103) and a sensor module (104), wherein all communication modules (101) are configured to a same communication network (200), comprising the following steps:
001. Each sensor module (104) detects whether someone or something is within its resepective detection range and generates an effective signal if someone or something is detected; **characterised in that** each control module (102) of the same sensing lighting device (100) receives the effective signal from the respective sensor module and sends the effective signal to the communication network (200) through the communication module (103), and controls the light source module (101) of the same sensing lighting device (100) according to the effective signal to maintain a first brightness;
002. Each control module (102) receives an effective signal present in from the communication network (200) through the communication module (103) of the same sensing lighting device (100), and controls the light source module (101) of the same sensing lighting device (100) to maintain the first brightness;
003. When the control module (102) determines that there is no effective signal at present, it controls the brightness of the respective light source module (101) of the same sensing lighting device (100) to maintain a second brightness less than the first brightness.

6. The automatic lighting control method as claimed in claim 5, wherein in step 001, the control module (102) controls the light source module (101) of the same device to maintain at the first brightness according to the effective signal delay of 30ms~100ms.

7. The automatic lighting control method as claimed in claim 5, wherein a detection period of the sensor module (104) in step 001 is 5s to 20s.

8. The automatic lighting control method as claimed in claim 5, wherein in step 003, the control module (102) determines that there is no effective signal at present under the following condition: the control module (102) has not received an effective signal after 20s to 50s.

## Patentansprüche

1. Automatisches Beleuchtungssystem, das eine Vielzahl von sensorischen Beleuchtungsvorrichtungen (100) umfasst, wobei jede sensorischen Beleuchtungsvorrichtung (100) ein Lichtquellenmodul (101), ein Steuermodul (102), ein Kommunikationsmodul (103) und ein Sensormodul (104) umfasst, wobei alle Kommunikationsmodule (101) auf ein und dasselbe Kommunikationsnetzwerk (200) konfiguriert sind;
wobei jedes Sensormodul (104) so konfiguriert ist, dass es erkennt, ob sich jemand oder etwas in seinem jeweiligen Erfassungsbereich befindet, und dass es ein Wirksignal erzeugt, wenn jemand oder etwas erkannt wird;
**dadurch gekennzeichnet, dass** jedes Steuermodul (102) so konfiguriert ist, dass es:
das Wirksignal von dem jeweiligen Sensormodul (104) derselben sensorischen Beleuchtungsvorrichtung (100) zu empfangen und, wenn das Wirksignal von dem jeweiligen Sensormodul (104) derselben sensorischen Beleuchtungsvorrichtung (100) empfangen wird, das Wirksignal über das Kommunikationsmodul (103) an das Kommunikationsnetz (200) zu senden;
ein im Kommunikationsnetz (200) vorhandenes Wirksignal über das Kommunikationsmodul (103) zu empfangen;
die Helligkeit des jeweiligen Lichtquellenmoduls (101) derselben sensorischen Beleuchtungsvorrichtung (100) zu steuern, um eine erste Helligkeit beizubehalten, wenn das Wirksignal von dem jeweiligen Sensormodul (104) derselben sensorischen Beleuchtungsvorrichtung (100) oder dem Kommunikationsnetzwerk (200) empfangen wird;
und die Helligkeit des jeweiligen Lichtquellenmoduls (101) derselben sensorischen Beleuchtungsvorrichtung (100) zu steuern, um eine zweite Helligkeit beizubehalten, die geringer ist als die erste Helligkeit, nachdem kein Wirksignal von dem jeweiligen Sensormodul (104) derselben sensorischen Beleuchtungsvorrichtung (100) oder dem Kommunikationsnetzwerk (200) empfangen wird.

2. Automatisches Beleuchtungssystem nach Anspruch 1, wobei jedes Kommunikationsmodul (103) für die Verwendung von Bluetooth konfiguriert ist.

3. Automatisches Beleuchtungssystem nach Anspruch 1, wobei jedes Sensormodul (104) ein Mikrowellensensor ist.

4. Automatisches Beleuchtungssystem nach Anspruch 1, bei dem die Vielzahl der sensorischen Beleuchtungsvorrichtung (100) in demselben Beleuchtungsbereich installiert sind.

5. Automatisches Beleuchtungssteuerungsverfahren für ein automatisches Beleuchtungssystem, das eine Vielzahl von sensorischen Beleuchtungsvorrichtungen (100) umfasst, wobei jede sensorische Beleuchtungsvorrichtung (100) ein Lichtquellenmodul (101), ein Steuermodul (102), ein Kommunikationsmodul (103) und ein Sensormodul (104) umfasst, wobei alle Kommunikationsmodule (101) auf ein und dasselbe Kommunikationsnetz (200) konfiguriert sind, mit den folgenden Schritten:
001. Jedes Sensormodul (104) erfasst, ob sich jemand oder etwas in seinem jeweiligen Erfassungsbereich befindet, und erzeugt ein Wirksignal, wenn jemand oder etwas erfasst wird, **dadurch gekennzeichnet, dass** jedes Steuermodul (102) derselben sensorischen Beleuchtungsvorrichtung (100) das Wirksignal von dem jeweiligen Sensormodul empfängt und das Wirksignal über das Kommunikationsmodul (103) an das Kommunikationsnetz (200) sendet und das Lichtquellenmodul (101) derselben sensorischen Beleuchtungsvorrichtung (100) entsprechend dem Wirksignal steuert, um eine erste Helligkeit beizubehalten;
002. Jedes Steuermodul (102) empfängt ein im Kommunikationsnetz (200) vorhandenes Wirksignal über das Kommunikationsmodul (103) derselben sensorischen Beleuchtungsvorrichtung (100) und steuert das Lichtquellenmodul (101) derselben sensorischen Beleuchtungsvorrichtung (100), um die erste Helligkeit beizubehalten;
003. Wenn das Steuermodul (102) feststellt, dass derzeit kein Wirksignal vorhanden ist, steuert es die Helligkeit des jeweiligen Lichtquellenmoduls (101) derselben sensorischen Beleuchtungseinrichtung (100), um eine zweite Helligkeit aufrechtzuerhalten, die geringer ist als die erste Helligkeit.

6. Automatisches Beleuchtungssteuerungsverfahren nach Anspruch 5, wobei in Schritt 001 das Steuermodul (102) das Lichtquellenmodul (101) derselben Vorrichtung so steuert, dass es die erste Helligkeit entsprechend der effektiven Signalverzögerung von 30ms∼100ms beibehält.

7. Automatisches Beleuchtungssteuerungsverfahren nach Anspruch 5, wobei eine Erfassungsperiode des Sensormoduls (104) in Schritt 001 5s bis 20s beträgt.

8. Automatisches Beleuchtungssteuerungsverfahren nach Anspruch 5, wobei in Schritt 003 das Steuermodul (102) feststellt, dass derzeit kein Wirksignal vorliegt, und zwar unter der folgenden Bedingung: das Steuermodul (102) hat nach 20s bis 50s kein Wirksignal empfangen.

## Revendications

1. Un système d'éclairage automatique, comprenant une multiplicité de dispositifs d'éclairage de détection (100), dans lequel chaque dispositif d'éclairage de détection (100) comporte un module de source lumineuse (101), un module de commande (102), un module de communication (103) et un module de détection (104), dans lequel tous les modules de communication (101) sont configurés pour un même réseau de communication (200),
dans lequel chaque module de détection (104) est configuré pour détecter si quelqu'un ou quelque chose est à l'intérieur de sa zone de détection respective et pour générer un signal effectif en cas de détection ;
**caractérisé en ce que** chaque module de commande (102) est configuré pour :
recevoir le signal effectif du module de détection respectif (104) d'un même dispositif d'éclairage de détection (100) et, si le signal effectif du module de détection respectif (104) du même dispositif d'éclairage de détection est reçu, transmettre le signal effectif au réseau de communication (200) via le module de communication (103) ;
recevoir un signal effectif présent dans le réseau de communication (200) via le module de communication (103) ;
commander la luminosité du module de source lumineuse respectif (101) du même dispositif d'éclairage de détection (100) pour maintenir une première luminosité si le signal effectif est reçu du module de détection respectif (104) du même dispositif d'éclairage de détection (100) ou du réseau de communication ; et commander la luminosité du module de source lumineuse (101) respectif du même dispositif d'éclairage de détection (100) pour maintenir une seconde luminosité inférieure à la première luminosité en réponse à l'absence de signal effectif reçu du module de détection respectif (104) du même dispositif d'éclairage de détection (100) ou du réseau de communication (200).

2. Le système d'éclairage automatique tel que revendiqué dans la revendication 1, dans lequel le module de communication (103) est configuré pour une utilisation de Bluetooth.

3. Le système d'éclairage automatique tel que revendiqué la revendication 1, dans chaque module de détection (104) est un capteur à micro-ondes.

4. Le système d'éclairage automatique tel que revendiqué la revendication 1, dans lequel les multiples dispositifs d'éclairage de détection (100) sont installés dans la même zone d'éclairage.

5. Un procédé de commande automatique d'éclairage pour un système d'éclairage automatique comprenant une pluralité de dispositifs d'éclairage de détection (100), dans lequel chaque dispositif d'éclairage de détection (100) comporte un module de source lumineuse (101), un module de commande (102), un module de communication (103) et un module de détection (104), dans lequel tous les modules de communication (101) sont configurés pour un même réseau de communication (200), comprenant les étapes suivantes :
001. chaque module de détection (104) détecte si quelqu'un ou quelque chose se trouve dans sa plage de détection et génère un signal efficace si quelqu'un ou quelque chose est détecté ; **caractérisé en ce que** chaque module de commande (102) d'un même dispositif d'éclairage de détection (100) reçoit le signal effectif du module de détection respectif et transmet le signal effectif au réseau de communication (200) au travers le module de communication (103), et commande le module de source lumineuse (101) du même dispositif d'éclairage de détection en fonction du signal effectif pour maintenir une première luminosité ;
002. chaque module de commande (102) reçoit un signal effectif présent dans le réseau de communication (200) via le module de communication (103) du même dispositif d'éclairage de détection (100),
Et commande le module de source lumineuse (101) du même dispositif d'éclairage de détection (100) pour maintenir la première luminosité ;
003. lorsque le module de commande (102) déterminer qu'il n'y a aucun signal effectif présent, il commande la luminosité du module de source lumineuse respectif (101) du même dispositif d'éclairage de détection (100) pour maintenir une seconde luminosité inférieure à la première luminosité.

6. Le procédé de commande automatique d'éclairage tel que revendiqué dans la revendication 5, dans lequel à l'étape 001, le module de commande (102) commande le module de source lumineuse (101) du même dispositif pour maintenir la première luminosité selon le retard de signal effectif de 30 ms - 100 ms.

7. Le procédé de commande automatique d'éclairage tel que revendiqué la revendication 5, dans lequel une période de détection du module de détection (104) à l'étape 001 est de 5 s à 20 s.

8. Le procédé de commande automatique d'éclairage tel que revendiqué la revendication 5, dans lequel à l'étape 003, le module de commande (102) détermine qu'il n'y a aucun signal effectif actuel dans la condition suivante : le module de commande (102) n'a pas reçu de signal effectif après 20s et jusqu'à 50 secondes.
